# EUROPEAN PATENT SPECIFICATION

(11) **EP 4 480 162 B1**
(45) Date of publication and mention of the grant of the patent: **08.04.2026**
(21) Application number: 23705631.2
(22) Date of filing: 03.02.2023
(51) Int. Cl.: H04L 67/025, H04L 67/12, G07C 5/00, G07C 5/08, H04L 67/125, H04L 67/141, H04L 67/562

(54) **VEHICLE DIAGNOSTIC METHOD**
FAHRZEUGDIAGNOSEVERFAHREN
PROCÉDÉ DE DIAGNOSTIC DE VÉHICULE

(30) Priority: 16.02.2022 GB 202202069
(43) Date of publication of application: 25.12.2024
(73) Proprietor: Belron International Limited, Egham, Surrey TW20 9EL (GB)
(72) Inventor: TANGEN, Åge, 0655 Oslo (NO); MYHRER, Christoffer, 0655 Oslo (NO); SUNDVOLL, Henning, 0655 Oslo (NO)
(74) Representative: Murgitroyd & Company
(86) International application number: PCT/GB2023/050250
(87) International publication number: WO 2023/156757

(56) References cited:
- US-A1- 2018 293 811
- US-A1- 2021 074 088
- US-A1- 2021 354 707

## Description

### BACKGROUND

The present specification relates to methods of performing a diagnostic evaluation of a vehicle and methods of servicing a vehicle. In addition, the present specification relates to systems for executing diagnostic evaluations of a vehicle.

Diagnostic evaluations of a vehicle, wherein a computing device is connected to the vehicle, are now a relatively common part of a vehicle service. However, the extent and usefulness of these diagnostic evaluations can vary significantly depending on the technician performing the evaluation.

Safety systems for vehicles including cars, motorbikes, trucks and HGVs, are becoming increasingly complex. Many vehicles now comprise advanced driver-assistance systems (ADAS) to assist drivers in driving and parking functions and to improve road safety. ADAS use sensors, such as cameras, and other electronics, to detect obstacles or driver errors, and respond accordingly. As such, most vehicles now comprise an array of sensors and associated electrical systems. These safety systems (such as ADAS or other sensor arrays) need to be properly installed and maintained in order to function correctly. Requirements for how to correctly install and maintain the safety (and other electronic) systems of a vehicle vary for each vehicle manufacturer, and often depend on the particular vehicle model. Accordingly, vehicle servicing is now more complex and should be carried out by a specialist.

The following documents may provide technical background to the present disclosure: US2021/074088 A1; US2021/354707 A1; and US2018/293811 A1.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a method of performing a diagnostic evaluation of a vehicle, comprising connecting a local computing device to a vehicle, wherein the local computing device and the vehicle are provided at a first location, providing a remote computing device at a second location, wherein the second location is remote from the first location, establishing a wireless communication link between the remote computing device and the local computing device, thereby enabling the remote computing device to control the local computing device. Using the remote computing device, controlling the local computing device to access an original equipment manufacturer, OEM, portal, thereby operatively connecting the OEM portal to the local computing device, and performing a diagnostic evaluation of the vehicle, wherein the diagnostic evaluation of the vehicle is performed by the OEM portal using the local computing device, wherein the local computing device can be controlled by the remote computing device.

Equivalently, the vehicle diagnostic evaluation can be considered to be performed by the local computing device using the OEM portal, wherein the local computing device can be controlled by the remote computing device.

Thus, according to the present disclosure, a remote expert (or remote technician, or remote specialist) can initiate and control a vehicle diagnostic evaluation from a location that is remote from the vehicle itself. The expert can be a specialist in the particular OEM diagnostic evaluation process required for a given vehicle. Advantageously, the present disclosure means that the expert does not have to travel to the location of the vehicle. This can also allow the expert to control multiple vehicle diagnostic evaluations simultaneously from their remote computing device.

Experts in vehicle diagnostics are difficult to hire as demand is greater than supply, so the solution provided in the present disclosure helps with lowering the demand on hiring geographically. Also, the complexity and variety of OEM tools means that it is difficult to train all technicians to have the skills necessary to ensure all customer vehicles are serviced correctly. Having a few experts trained fully can ensure that all diagnostic requirements are met, where a company can have to service all makes, models, ages and complexity of vehicle. Thus, the method of the present disclosure can be considered to improve safety, as it ensures that the diagnostic evaluation is carried out by a qualified specialist, rather than a local technician who may not perform the evaluation correctly.

As stated above, in the present disclosure it is the remote expert using the remote computing device that accesses the OEM portal via the local computing device. Thus, the local technician at the first location does not connect the local computing device to the OEM portal. This is advantageous compared to methods where the local technician at the first location may access the OEM portal, as it improves safety and maintains quality standards by ensuring that access to the OEM portal is restricted to a qualified specialist, rather than a local technician who may attempt to start the evaluation themself, without the proper training or accreditation.

It will be appreciated that the second location is geographically remote from the first location (i.e., not locations that are within the same room but slightly spaced apart). Optionally, the first location may be a garage or auto-repair facility, and the second location may be a specialist technical centre or a commercial or private residence of the remote specialist. It will be appreciated that these locations are provided as examples only and are not limiting.

Although the local computing device can primarily be controlled by the remote computing device to manage the diagnostic evaluation, it will be appreciated that a local technician at the first location can control the local computing device if needed. Even though the local computing device at the first location is under the control of the remote expert, the technician may be able to enter keystrokes and take control should they need to. Thus, the wireless communication link does not restrict control of the local computing device to the remote computing device.

Optionally the OEM portal may be referred to as an OEM database. The OEM database may be hosted on a remote server.

Optionally, the OEM portal is a diagnostic tool that may be accessed via a communication network, such as the internet. Thus, the OEM portal may be hosted on a web page. The OEM portal may comprise menu driven web pages that control actions on the vehicle (via the local computing device) or display data from the vehicle on the local computing device. In some embodiments the OEM portal can be accessed via the vehicle manufacturer web page.

Establishing the wireless communication link between the remote computing device and the local computing device comprises using a remote desktop application on the remote computing device. Using the remote desktop application may also be referred to as activating or initiating the remote desktop application. Various software solutions enabling remote control of a computing device may be used and are within the scope of the present disclosure.

Optionally, the wireless communication link between the remote computing device and the local computing device may have an inactive or dormant mode and an active mode. The method may comprise activating the wireless communication link between the remote computing device and the local computing device.

Optionally, controlling the local computing device to access the OEM portal comprises accessing the OEM portal using the local computing device via a wireless communication network. For example, the remote computing device may instruct the local computing device to access a webpage for the OEM portal. The OEM portal may be accessed via a URL.

Accessing the OEM portal may further comprise entering authentication details on the local computing device via the wireless communication link, wherein the authentication details are associated with a registered user of the OEM portal. The registered user may be the remote expert. Thus, the local technician at the first location may not have access to the authentication details, such that access is restricted to the remote expert (again improving safety and quality standards).

Optionally, the remote expert using the remote computing device may control the local computing device to enter login details for the OEM portal, such as a username and password, wherein the login details are associated with the remote expert's registered account with the OEM portal. This authentication process may ensure that only qualified personnel have the required permissions to carry out the remote diagnostic evaluation of a vehicle manufactured by the OEM.

Optionally, prior to enabling the remote computing device to control the local computing device, the method may comprise sending an electronic communication to a remote technician to request initiation of the remote diagnostic evaluation. The remote technician may be at the second location, although it will be appreciated that the remote technician may not be at the second location when the communication is sent and/or received.

In other words, prior to enabling the remote computing device to control the local computing device, the method may comprise sending an electronic communication to a remote technician to request initiation of the wireless communication link.

The electronic communication may be (but is not limited to) an email, or a phone call, or an SMS, or a message in a communication app.

Optionally, the electronic communication may be sent from the local computing device to the remote computing device.

Optionally, the electronic communication may be sent from a second local computing device to a second remote computing device. In some embodiments, the second local computing device and/or the second remote computing device may be a mobile phone or a tablet.

Performing the diagnostic evaluation of the vehicle may include performing a diagnostic scan or a diagnostic pre-scan of at least one electronic system in the vehicle.

The diagnostic scan or a diagnostic pre-scan may determine a status of at least one electronic system in the vehicle. It will be appreciated that a pre-scan may be performed as an initial scan before a certain action is taken, such as replacement of a vehicle component.

Optionally, the diagnostic evaluation includes performing a diagnostic scan or diagnostic pre-scan of at least one electronic system of the vehicle and identifying at least one fault code relating to the at least one electronic system. The term fault code and error code may be interchangeable.

Optionally, the diagnostic evaluation comprises outputting or storing the at least one fault code identified.

According to a second aspect, the present disclosure provides a method of servicing a vehicle, comprising performing a diagnostic evaluation of the vehicle according to any embodiment or example of the first aspect of the invention, and taking at least one action in response to the diagnostic evaluation of the vehicle.

The at least one action may be performed by one or more of: the local computing device; the remote computing device; the OEM portal; a local technician at the first location; a remote technician at the second location.

Optionally, the diagnostic evaluation includes performing a diagnostic scan or diagnostic pre-scan of at least one electronic system of the vehicle and identifying at least one fault code relating to the at least one electronic system.

The at least one action may comprise investigating the at least one fault code to determine the cause of the fault code.

Optionally, the at least one action comprises determining if each fault code needs to be addressed or not. Equivalently, the at least one action may comprise determining if each fault code is relevant or requires attention, or determining an importance of each fault code.

Optionally, in response to determining that a fault code needs to be addressed (or that a fault code is of high importance or requires attention), the method may comprise resolving the fault code or taking action to resolve the fault code. The method may comprise clearing or erasing the fault code after it has been resolved.

Optionally, in response to determining that a fault code does not need to be addressed (or that a fault code is of low importance or does not require attention), the method may comprise clearing or erasing the fault code.

Optionally, the at least one action comprises programming and/or updating at least one software module of the vehicle. Specifically, the at least one action may comprise programming and/or updating firmware of at least one software module of the vehicle.

Optionally, the at least one action comprises retrieving and/or storing data resulting from the diagnostic evaluation of the vehicle, or resulting from the servicing of the vehicle. For example, the data may be used to provide confirmation of the vehicle service.

Optionally, the data may comprise fault codes and/or process information relating to the at least one action taken, such as recalibration of a vehicle sensor. The data may provide a record of the actions performed on the vehicle. This data can optionally provide proof of recalibration for customers. The data may be retrieved from the OEM portal and/or the local computing device. The data may be stored on the local computing device and/or the remote computing device.

Optionally, the at least one action comprises initiating and managing a recalibration process of at least one vehicle sensor.

Optionally, the at least one vehicle sensor includes a vehicle camera. In some embodiments, the vehicle sensor may be a forward-facing camera, or a backward-facing camera. The at least one vehicle sensor is not limited to a camera. For example, the at least one vehicle sensor may include a radar receiver or emitter. In some embodiments, the at least one sensor may form part of an advanced driver-assistance system (ADAS).

Optionally, the recalibration process comprises identifying a position and/or orientation of the vehicle sensor. The position and/or orientation of the vehicle sensor may include the location and/or angle of the vehicle sensor relative to a predetermined reference point.

The recalibration process will vary depending on the type of vehicle sensor being recalibrated. In addition, the recalibration process will vary depending on the make and model of the vehicle, or depending on the OEM.

The recalibration process may include determining whether the vehicle sensor is in the correct position and/or orientation. The recalibration process may include determining whether the vehicle sensor is in the correct position and/or orientation relative to at least one predetermined reference point.

Optionally, the recalibration process comprises determining where the at least one vehicle sensor is pointing relative to a vehicle centre line and horizon. It will be appreciated that each vehicle sensor may be calibrated individually.

Optionally, the local computing device may output a data from the least one vehicle sensor during the calibration process. In some embodiments, the local computing device may display image or video data output from the vehicle sensor. This image or video data may allow the remote technician operating the remote computing device to determine if the sensor is in the correct position. It will be appreciated that the 'correct' position is usually predetermined by the OEM for the given vehicle, thus the 'correct' sensor position should be known by the OEM portal.

Optionally, the recalibration process further comprises, in response to determining that the vehicle sensor is in the correct position and/or orientation, outputting confirmation to a local technician at the first location. The confirmation may indicate that the recalibration is complete.

Outputting confirmation to the local technician may comprise sending an electronic communication to the local technician. Optionally, outputting confirmation to the local technician may comprise the remote technician sending an electronic communication to the local technician, for example the electronic communication may be a message displayed on the local computing device, or an email, or a text, or a phone call. The electronic communication may be sent to a second local computing device associated with the local technician.

Optionally, the confirmation to the local technician may be output automatically by the OEM portal or by the local computing device. Thus, this may not require the remote technician to take any action.

In response to determining that the vehicle sensor is in the incorrect position and/or the incorrect orientation, the method may comprise outputting instructions to a local technician at the first location to adjust the vehicle sensor to the correct position and/or orientation. The instructions may direct the local technician to adjust an angle and/or position of the given vehicle sensor by a given amount.

Outputting instructions to the local technician may comprise sending an electronic communication to the local technician. Optionally, outputting instructions to the local technician may comprise the remote technician sending an electronic communication to the local technician, for example the electronic communication may be a message displayed on the local computing device, or an email, or a text, or a phone call. The electronic communication may be sent to a second local computing device associated with the local technician.

Optionally, the recalibration process further comprises providing the position and/or orientation of the vehicle sensor (e.g., the current position and/or orientation of the vehicle sensor) to at least one component of the vehicle. This may be required to ensure correct operation of the vehicle sensor systems, or vehicle safety systems.

The at least one component may be a software system. Optionally, the at least one component may form part of a vehicle safety system. The at least one component may form part of an ADAS.

Optionally, the diagnostic evaluation is a first diagnostic evaluation. Optionally, the method further comprises performing a second diagnostic evaluation of the vehicle after taking the at least one action. The second diagnostic evaluation may be as described in any embodiment or example of the first or second aspect of the disclosure.

Thus, the second diagnostic evaluation may be used to verify that any issues (e.g., fault codes) identified in the first diagnostic evaluation have been addressed. Additionally or alternatively, the second diagnostic evaluation may be used to verify that the at least one action (e.g., the recalibration of at least one vehicle sensor) has been satisfactorily completed and that no further action is required.

A third aspect of the present disclosure provides a method of replacing a component of a vehicle, comprising removing the component from the vehicle and installing a replacement component in the vehicle, and performing a diagnostic evaluation of the vehicle as described in any embodiment or example of the first or second aspect of this disclosure.

A fourth aspect of the present disclosure provides a method of replacing a component of a vehicle, comprising removing the component from the vehicle and installing a replacement component in the vehicle, and servicing the vehicle as described in any embodiment or example of the second aspect of this disclosure.

A fifth aspect of the present disclosure provides a method of replacing a component of a vehicle, comprising performing a diagnostic evaluation of a vehicle, wherein the diagnostic evaluation is performed according to any embodiment or example of the first aspect of the disclosure, removing the component from the vehicle and installing a replacement component in the vehicle, and servicing the vehicle according to any embodiment or example of the second aspect of the disclosure.

Optionally, the component is a windscreen, a vehicle body panel, a bumper, a wheel, a vehicle sensor, and/or a portion of an electronic system.

In some embodiments the method may comprise performing a diagnostic pre-scan of the vehicle, removing the windscreen from the vehicle and installing a replacement windscreen in the vehicle, and servicing the vehicle according to any embodiment or example of the second aspect of the disclosure, including recalibrating at least one vehicle sensor.

A sixth aspect of the present disclosure provides a vehicle diagnostic system, comprising an original equipment manufacturer, OEM, portal, a local computing device configured to be connected to a vehicle, wherein the local computing device and the vehicle are provided at a first location, and a remote computing device provided at a second location, wherein the second location is remote from the first location. The remote computing device is coupled to the local computing device by a wireless communication link, thereby enabling the remote computing device to control the local computing device. The remote computing device is operable to control the local computing device to access the OEM portal to operatively connect the OEM portal to the local computing device. The OEM portal is configured to perform a diagnostic evaluation of the vehicle using the local computing device, wherein the local computing device can be controlled by the remote computing device.

The system may be arranged or configured to carry out the method of any preceding embodiment or example in the preceding aspects of the disclosure.

It will be appreciated that the vehicle itself does not form part of the system according to the present disclosure.

The local computing device may be connected to a diagnostic port of the vehicle via a cable. Optionally, the local computing device may be connected to a network port or a data port of the vehicle. In some embodiments, the local computing device may be connected to an ethernet port provided in the vehicle. Thus, the local computing device may be directly connected to the vehicle by a cable.

In other embodiments, the local computing device may be wirelessly connected to the vehicle. In some embodiments, the local computing device may be wirelessly connected to the vehicle by an interface device. The interface device may be directly connected to the vehicle.

Optionally, the remote computing device comprises a remote desktop application, and the remote desktop application is configured to establish the remote wireless communication link between the remote computing device and the local computing device.

Optionally, at least one of the remote computing device and the local computing device is a laptop, tablet, PC, or a mobile phone.

### BRIEF DESCRIPTION OF THE DRAWINGS

Embodiments of this disclosure will be described hereinafter, by way of example only, with reference to the accompanying drawings in which like reference signs relate to like elements and in which:
Figure 1 shows a block diagram illustrating a vehicle diagnostic system according to an embodiment of the present disclosure;
Figure 2 is a flowchart illustrating a method of performing a diagnostic evaluation of a vehicle according to an embodiment of this disclosure;
Figure 3 is a flowchart illustrating a method of servicing a vehicle according to an embodiment of this disclosure; and
Figure 4 is a flowchart illustrating a method of servicing a vehicle including replacing a vehicle component, according to an embodiment of this disclosure.

### DETAILED DESCRIPTION

Embodiments of this disclosure are described in the following with reference to the accompanying drawings.

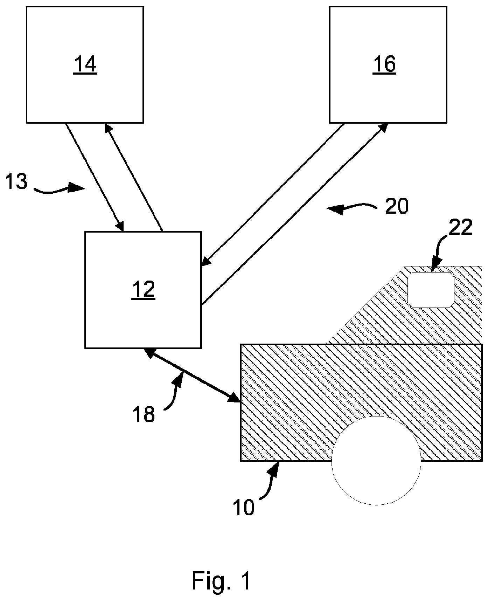

Figure 1 shows a system for performing a diagnostic evaluation of a vehicle 10 according to an embodiment of the present disclosure. It will be appreciated that the vehicle 10 does not form part of the system according to the present disclosure. Although Figure 1 depicts the vehicle 10 as a car, it will be appreciated the vehicle may be any kind of vehicle comprising at least one electronic system, such as a motorbike, a motorhome, a truck, a HGV, or other commercial, industrial or agricultural vehicles. In this embodiment, the vehicle 10 comprises at least one sensor 22, wherein the at least one sensor forms part of a vehicle safety system.

The system comprises a local computing device 12, a remote computing device 14 and an original equipment manufacturer (OEM) portal 16. The local computing device 12 is physically and electrically connected to a diagnostic, network or data port of the vehicle 10 using a cable 18. A typical connection port is the OBD2 port, but in some vehicles the connection port is an ethernet port, or other diagnostic, network or data port of the vehicle 10.

The cable 18 allows for two-way communication between the local computing device 12 and the vehicle 10. In other embodiments, the local computing device 12 may be wirelessly connected to the vehicle 10 (i.e. without the cable 18). For example, some OEM diagnostic systems utilise an interface device (not shown), such as a vehicle connection interface (VCI), which is plugged into the vehicle 10 and then communicates wirelessly with the local computing device (e.g., via Bluetooth^{®}).

The local computing device 12 and the vehicle 10 are provided at a first location (e.g., an auto-repair shop or garage). The remote computing device 14 is provided at a second location that is geographically remote from the first location. A wireless communication link 13 communicatively couples the remote computing device 14 to the local computing device 12. The wireless communication link 13 allows for two-way communication between the local computing device 12 and the remote computing device 14. The wireless communication link 13 enables the remote computing device 14 to control the local computing device 12.

The OEM portal 16 is a remote internet based diagnostic tool. Each vehicle manufacturer generally has their own OEM portal 16. Thus, the local computing device 12 may access the OEM portal 16 via a web browser (e.g., using a URL for the OEM portal 16). In some embodiments, the OEM portal 16 may be a database hosted by a remote server.

To gain access to the OEM portal 16 a user may be required to enter valid authentication details, such as a username and password. Thus, access to the OEM portal 16 may be restricted to registered (or authorized) users to ensure that only specialists with the correct training and experience are authorized to carry out diagnostic evaluations of a vehicle using the OEM portal 16.

When the local computing device 12 has successfully accessed the OEM portal 16, the OEM portal 16 is operatively connected to the local computing device. Thus, a two-way communication channel 20 may be established between the OEM portal 16 and the local computing device 12.

The local computing device 12 and the remote computing device 14 may each be a laptop, a tablet computer, a PC, a mobile phone or smart phone, or any other type of computing device. The local computing device 12 and the remote computing device 14 each comprise at least one processor and memory. The local and/or remote computing devices 12,14 may include a processing device, a main memory (e.g., read-only memory (ROM), flash memory, dynamic random-access memory (DRAM) such as synchronous DRAM (SDRAM) or Rambus DRAM (RDRAM), etc.), a static memory (e.g., flash memory, static random-access memory (SRAM), etc.), and a secondary memory (e.g., a data storage device 118), which communicate with each other via a bus. The local and/or remote computing devices 12,14 may include a display screen for displaying data. Optionally, the display screen may be a touch screen.

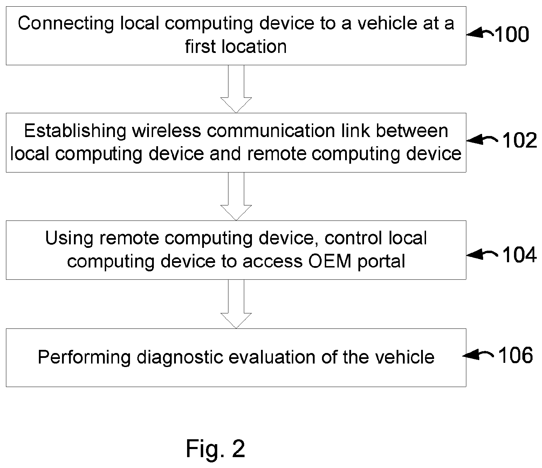

Figure 2 shows a method of performing a diagnostic evaluation of a vehicle according to an embodiment of the present disclosure. The method may be performed by the system in Figure 1. In this embodiment, the method comprises connecting a local computing device 12 to a vehicle 10 at a first location (step 100). Step 100 may comprise connecting cable 18 to a vehicle diagnostic port of the vehicle 10 and connecting cable 18 to the local computing device 12.

Step 102 comprises establishing the wireless communication link 13 between a remote computing device 14 and the local computing device 12, wherein the wireless communication link 13 enables the remote computing device 14 to control the local computing device 12. The remote computing device 14 is provided (or disposed) at a second location that is remote from the first location.

Step 102 may comprise activating (or initiating) a remote desktop software application. The remote desktop software application may be installed on both the local computing device 12 and the remote computing device 14.

The local computing device 12 may be operated by a local technician. The remote computing device 14 may be operated by a remote technician (or remote expert or remote specialist). Thus, according to the present disclosure, a remote expert can initiate and control a vehicle diagnostic evaluation from a location that is remote from the vehicle itself.

It will be appreciated that the order of step 100 and step 102 may be reversed.

Step 104 comprises, using the remote computing device 14, controlling the local computing device 12 to access the OEM portal 16. Thus, at step 104 the remote technician may take control of the local computing device 12, open the web browser on the local computing device 12, and enter the URL for the desired OEM portal 16. Alternatively, the remote technician may click a link on the local computing device 12 which connects to the desired OEM portal 16. Thus, at step 104 the OEM portal is operatively connected to the local computing device 12.

At step 106, a diagnostic evaluation of the vehicle 10 is performed by the OEM portal 16 using the local computing device 12. Some portions of the diagnostic evaluation may be automated. Some portions of the diagnostic evaluation may be managed or controlled by the remote expert via the wireless communication link 13 with the local computing device 12.

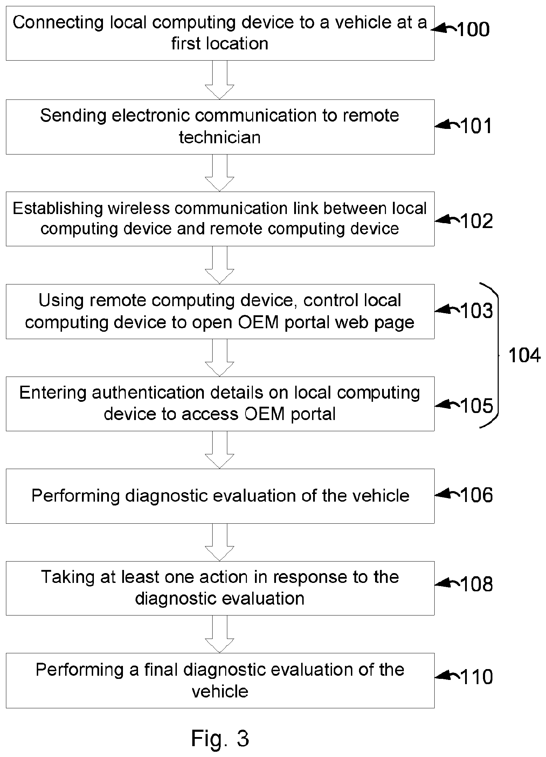

A method of servicing a vehicle according to an embodiment of the present disclosure is shown in Figure 3. Steps which are common between Figures 2 and 3 have been given the same reference number.

In Figure 3, there is an additional step 101 between step 100 and step 102. Step 101 comprises sending an electronic communication to the remote technician to request initiation of the wireless communication link 13. The electronic communication may be sent by the local technician to the remote technician. The method of sending the electronic communication may vary. In some embodiments, step 101 may comprise sending an electronic communication to the remote computing device 14. In some embodiments, step 101 may comprise sending an electronic communication to a second remote computing device, such as a smart phone.

Following receipt of the electronic communication, the remote technician at the second location may establish the wireless communication between the remote computing device 14 and the local computing device, as described above in connection with step 102.

In Figure 3, step 104 described above has been divided into step 103 and step 105. In step 103 the remote technician controls the local computing device 12 to open the OEM portal 16 web page. In step 105, the remote technician enters their authentication details when prompted to do so on the local computing device 12. The authentication details may comprise a username and password, wherein the username and password are associated with the remote technician. The OEM portal 16 may verify that the authentication details belong to an authorized (or registered) user. If the authentication details are valid the OEM portal 16 operatively connects to the local computing device 12.

At step 106, the diagnostic evaluation of the vehicle 10 includes a diagnostic scan or a diagnostic pre-scan of at least one electronic system in the vehicle 10. The local computing device 12 may output the results of the diagnostic evaluation. Optionally, the diagnostic evaluation may comprise outputting or identifying at least one fault code associated with the at least one electronic system of the vehicle.

At least one action 108 is taken following the diagnostic evaluation of the vehicle 10 (e.g., to address any issues identified in the diagnostic evaluation). The at least one action may be taken by one or more of: the local computing device 12, the remote computing device 14, the OEM portal 16, the local technician, or the remote technician. Thus, the diagnostic evaluation process shown in Figure 2 may form part of a method of servicing the vehicle 10.

Optionally, the at least one action 108 may comprise recalibrating at least one vehicle sensor 22. The recalibration process will depend on the type of sensor 22 and the make and model of the vehicle 10.

Optionally, the at least one action 108 may comprise investigation (by the remote technician) of all or some of the fault codes output from the diagnostic evaluation to understand the nature of the vehicle issue that created the code.

Optionally, the at least one action 108 may comprise clearing, or erasing, any fault codes stored in the electronic systems of the vehicle that have been resolved, or are determined to be of low importance or irrelevant.

Optionally, the at least one action 108 may comprise programming and/or updating at least one software module in the vehicle as required. For example, the remote technician may instruct a software update to be downloaded from the OEM portal 16 and applied to the vehicle 10 using the local computing device 12.

At step 110, a final diagnostic evaluation of the vehicle is performed after the at least one action has been taken to confirm that all issues have been satisfactorily addressed and the service is complete.

After step 110 the remote technician may retrieve and/or store all relevant diagnostic data, such as fault codes or process complete information as a record of the actions performed on the vehicle. It will be appreciated that step 110 may form part of step 108.

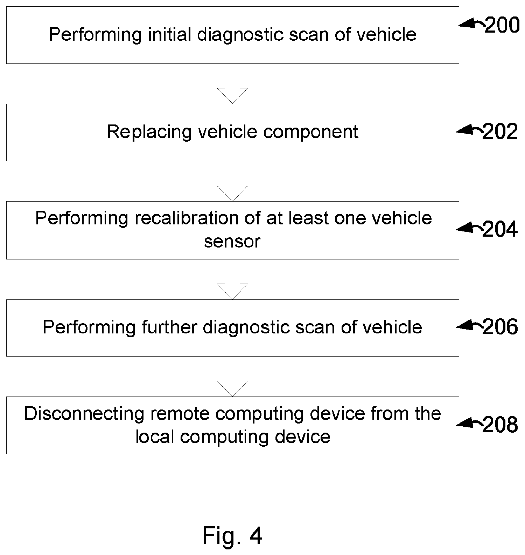

A method of replacing a vehicle component according to the present disclosure is shown in Figure 4. At step 200, an initial diagnostic scan of the vehicle is performed, as described in connection with steps 100 to 106 of Figure 2 and Figure 3.

Optionally, the remote technician may wish to store any fault code data output from the initial diagnostic scan. Optionally, the remote technician may wish to investigate further one or more fault codes listed (e.g., on the local computing device) following completion of the initial diagnostic scan. All fault codes may then be either cleared (following resolution) or deleted before step 202.

In step 202 the local technician removes a vehicle component and installs a replacement vehicle component. For example, the vehicle component may be (but it not limited to) a windscreen, a vehicle body panel, a vehicle body part, a bumper, a wheel, a wing mirror, a vehicle sensor, and/or a portion of an electronic system.

Optionally, the remote technician (or the local technician) may disable the wireless communication link between the remote computing device 14 and the local computing device 12 after step 200 is completed. In other embodiments, the wireless communication link may remain active (or enabled) during step 202. This may depend on the vehicle component being replaced.

If the wireless communication link was disabled, after step 202 is complete the remote technician may repeat steps 102 and 104 (or steps 102, 103 and 105) to reconnect to the local computing device 12 at the vehicle and access the OEM portal. Optionally, step 202 may include the local technician sending an electronic communication to the remote technician to confirm that the vehicle component has been replaced.

Step 204 comprises performing a recalibration of at least one vehicle sensor, such as (but not limited to) a vehicle camera used in a safety system. The recalibration process 204 may comprise determining the position and/or orientation of the at least one sensor is within an acceptable tolerance of at least one predetermined reference point.

In some embodiments, step 204 may comprise the local technician setting up a target system if a static recalibration is required. The target system may allow the OEM portal via the local computing device to determine whether the at least one sensor is in an acceptable position and/or orientation. This may require communication between the remote technical expert and the local technician at the vehicle, such as relaying information on the vehicle specific target required, the height and distance settings and confirming when the setup is complete.

Once the correct target (in the case of a static recalibration) has been positioned at the correct location in front of the vehicle, the remote technical expert initiates the recalibration process of the at least one sensor via the OEM portal 16.

During the recalibration process 204 there may be continued dialogue between the remote technical expert and the local technician. For example, if the recalibration requires the target system to be placed in another secondary position in front of the vehicle. In other examples, the remote expert may send instructions to the local technician regarding adjusting the at least one sensor to the correct position and/or orientation. The instructions may be determined based on feedback from the OEM portal.

In some embodiments, the remote expert can access image data from the at least one sensor on the local computing device. This image data can be used to ensure that the position and angle of the sensor is within a given tolerance specified by the OEM.

In some cases, a vehicle requires a dynamic recalibration, wherein the correct functionality of the safety systems is restored by a drive cycle managed by the local technician. In these cases, step 204 comprises the remote technical expert initiating the recalibration process on the OEM portal 16 and the local technician is instructed to drive the vehicle 10 (with local computing device 12 still connected to the vehicle). The remote expert monitors the progress of the dynamic recalibration process (which is executed by the OEM portal 16 using the local computing device 12) and electronically notifies the local technician when it is complete.

The recalibration process 204 may comprise providing the final position and/or orientation of the at least one vehicle sensor to the vehicle safety system.

Once the entire recalibration process 204 has been completed successfully (or not), the remote expert may notify the technician and may record any relevant diagnostic data, for example sensor position data stored in the vehicle memory, as evidence that the vehicle service and the recalibration has been completed successfully (or not).

In step 206 the remote technical expert performs another diagnostic scan of the vehicle systems, using the local computing device 12 and the OEM portal 16.

As with the initial scan, the remote expert may choose to store any fault code data resulting from the further diagnostic scan. The remote technical expert may wish to investigate further any fault codes listed. All fault codes may then be either cleared (following resolution) or deleted.

At step 208 the remote expert disconnects the local computing device 12 from the OEM portal 16 and disconnects the wireless communication link between the local computing device 12 and the remote computing device 14. The local technician disconnects the local computing device 12 from the vehicle 10 and the vehicle 10 can then be returned to the customer.

Accordingly, there has been described systems and methods of performing a diagnostic evaluation of a vehicle, comprising connecting a local computing device to a vehicle, establishing a wireless communication link between a remote computing device and the local computing device, wherein the wireless communication link may be via a remote desktop application, thereby enabling a remote expert using the remote computing device to control the local computing device, controlling the local computing device, using the remote computing device, to access an OEM portal and performing a diagnostic evaluation of the vehicle, wherein the diagnostic evaluation of the vehicle is performed by the OEM portal using the local computing device, wherein the local computing device can be controlled by the remote computing device.

Although particular embodiments of this disclosure have been described, it will be appreciated that many modifications/additions and/or substitutions may be made within the scope of the claims.

## Claims

1. A method of performing a diagnostic evaluation of a vehicle (10), comprising:
connecting (100) a local computing device (12) to a vehicle (10), wherein the local computing device (12) and the vehicle (10) are provided at a first location;
providing a remote computing device (14) at a second location, wherein the second location is remote from the first location;
establishing (102) a wireless communication link (13) between the remote computing device (14) and the local computing device (12), thereby enabling the remote computing device (14) to control the local computing device (12);
using the remote computing device (14), controlling (104) the local computing device (12) to access an original equipment manufacturer, OEM, portal (16), thereby operatively connecting the OEM portal (16) to the local computing device (12); and
performing (106) a diagnostic evaluation of the vehicle (10), wherein the diagnostic evaluation of the vehicle is performed by the OEM portal (16) using the local computing device (12), wherein the local computing device (12) can be controlled during the diagnostic evaluation by the remote computing device (14),
wherein establishing the wireless communication link (13) between the remote computing device (14) and the local computing device (12) comprises using a remote desktop application on the remote computing device (14).

2. The method of claim 1, wherein accessing the OEM portal further comprises entering (105) authentication details on the local computing device (12) via the wireless communication link (13), wherein the authentication details are associated with a registered user of the OEM portal (16).

3. The method of any preceding claim, wherein prior to enabling the remote computing device (14) to control the local computing device (12), the method comprises sending (101) an electronic communication to a remote technician to request initiation of the remote diagnostic evaluation.

4. The method of any preceding claim, wherein performing (106) the diagnostic evaluation of the vehicle includes performing a diagnostic scan or a diagnostic pre-scan of at least one electronic system in the vehicle.

5. A method of servicing a vehicle, comprising:
performing a diagnostic evaluation of the vehicle according to any one of claims 1 to 4; and
taking at least one action (108) in response to the diagnostic evaluation of the vehicle.

6. The method of claim 5, wherein the diagnostic evaluation includes performing a diagnostic scan or diagnostic pre-scan of at least one electronic system of the vehicle and identifying at least one fault code relating to the at least one electronic system, wherein the at least one action comprises:
investigating the at least one fault code to determine the cause of the fault code.

7. The method of claim 5, wherein the diagnostic evaluation includes performing a diagnostic scan or diagnostic pre-scan of at least one electronic system of the vehicle and identifying at least one fault code relating to the at least one electronic system, wherein the at least one action (108) comprises:
determining if each fault code needs to be addressed or not;
in response to determining that a fault code needs to be addressed, resolving the fault code; and
in response to determining that a fault code does not need to be addressed, clearing or erasing the fault code.

8. The method of any of claims 5 to 7, wherein the at least one action (108) comprises programming and/or updating at least one software module in the vehicle.

9. The method of any of claims 5 to 8, further comprising:
retrieving and/or storing data resulting from the diagnostic evaluation of the vehicle; and/or
retrieving and/or storing data resulting from the servicing of the vehicle.

10. The method of any of claims 5 to 9, wherein the at least one action (108) comprises initiating and managing a recalibration process (204) of at least one vehicle sensor.

11. The method of claim 10, wherein the recalibration process (204) comprises:
identifying a position and/or orientation of the vehicle sensor; and
determining whether the vehicle sensor is in the correct position and/or orientation.

12. The method of claim 11 wherein the recalibration process further comprises:
in response to determining that the vehicle sensor is in the correct position and/or orientation, outputting confirmation to a local technician at the first location; and
in response to determining that the vehicle sensor is in the incorrect position and/or orientation, outputting instructions to a local technician at the first location to adjust the vehicle sensor to the correct position and/or orientation.

13. The method of any of claims 5 to 12, wherein the diagnostic evaluation of the vehicle is a first diagnostic evaluation, wherein the method further comprises:
performing a second diagnostic evaluation (110; 206) of the vehicle after taking the at least one action, wherein the second diagnostic evaluation is according to any one of claims 1 to 4.

14. A method of replacing a component of a vehicle, comprising:
removing (202) the component from the vehicle and installing a replacement component in the vehicle;
performing (204; 206) a diagnostic evaluation of the vehicle according to any of claims 1 to 4, or servicing the vehicle according to any one of claims 5 to 13.

15. A method of replacing a component of a vehicle, comprising:
performing (200) a diagnostic evaluation of a vehicle, wherein the diagnostic evaluation is performed according to any one of claims 1 to 4;
removing (202) the component from the vehicle and installing a replacement component in the vehicle; and
servicing (204; 206) the vehicle according to any one of claims 5 to 13.

## Patentansprüche

1. Ein Verfahren zum Durchführen einer Diagnosebewertung eines Fahrzeugs (10), das Folgendes beinhaltet:
Verbinden (100) einer lokalen Rechenvorrichtung (12) mit einem Fahrzeug (10), wobei die lokale Rechenvorrichtung (12) und das Fahrzeug (10) an einem ersten Standort bereitgestellt sind;
Bereitstellen einer entfernten Rechenvorrichtung (14) an einem zweiten Standort, wobei der zweite Standort von dem ersten Standort entfernt ist;
Herstellen (102) einer drahtlosen Kommunikationsverbindung (13) zwischen der entfernten Rechenvorrichtung (14) und der lokalen Rechenvorrichtung (12), wodurch der entfernten Rechenvorrichtung (14) ermöglicht wird, die lokale Rechenvorrichtung (12) zu steuern;
unter Verwendung der entfernten Rechenvorrichtung (14), Steuern (104) der lokalen Rechenvorrichtung (12), um auf ein Portal (16) eines Erstausrüsters, OEM, zuzugreifen, wodurch das OEM-Portal (16) betriebsfähig mit der lokalen Rechenvorrichtung (12) verbunden wird; und
Durchführen (106) einer Diagnosebewertung des Fahrzeugs (10), wobei die Diagnosebewertung des Fahrzeugs durch das OEM-Portal (16) unter Verwendung der lokalen Rechenvorrichtung (12) durchgeführt wird, wobei die lokale Rechenvorrichtung (12) während der Diagnosebewertung durch die entfernte Rechenvorrichtung (14) gesteuert werden kann,
wobei das Herstellen der drahtlosen Kommunikationsverbindung (13) zwischen der entfernten Rechenvorrichtung (14) und der lokalen Rechenvorrichtung (12) das Verwenden einer entfernten Desktop-Anwendung auf der entfernten Rechenvorrichtung (14) beinhaltet.

2. Verfahren gemäß Anspruch 1, wobei das Zugreifen auf das OEM-Portal ferner das Eingeben (105) von Authentifizierungsdetails auf der lokalen Rechenvorrichtung (12) über die drahtlose Kommunikationsverbindung (13) beinhaltet, wobei die Authentifizierungsdetails mit einem registrierten Benutzer des OEM-Portals (16) assoziiert sind.

3. Verfahren gemäß einem der vorhergehenden Ansprüche, wobei das Verfahren vor dem Ermöglichen, dass die entfernte Rechenvorrichtung (14) die lokale Rechenvorrichtung (12) steuert, das Senden (101) einer elektronischen Kommunikation an einen entfernten Techniker beinhaltet, um die Einleitung der entfernten Diagnosebewertung anzufordern.

4. Verfahren gemäß einem der vorhergehenden Ansprüche, wobei das Durchführen (106) der Diagnosebewertung des Fahrzeugs das Durchführen eines Diagnosescans oder eines Diagnosevorscans von mindestens einem elektronischen System in dem Fahrzeug umfasst.

5. Ein Verfahren zum Warten eines Fahrzeugs, das Folgendes beinhaltet:
Durchführen einer Diagnosebewertung des Fahrzeugs gemäß einem der Ansprüche 1 bis 4; und
Ergreifen mindestens einer Aktion (108) als Reaktion auf die Diagnosebewertung des Fahrzeugs.

6. Verfahren gemäß Anspruch 5, wobei die Diagnosebewertung das Durchführen eines Diagnosescans oder Diagnosevorscans von mindestens einem elektronischen System des Fahrzeugs und das Identifizieren von mindestens einem Fehlercode, der sich auf das mindestens eine elektronische System bezieht, umfasst, wobei die mindestens eine Aktion Folgendes beinhaltet:
Untersuchen des mindestens einen Fehlercodes, um die Ursache des Fehlercodes zu bestimmen.

7. Verfahren gemäß Anspruch 5, wobei die Diagnosebewertung das Durchführen eines Diagnosescans oder Diagnosevorscans von mindestens einem elektronischen System des Fahrzeugs und das Identifizieren von mindestens einem Fehlercode, der sich auf das mindestens eine elektronische System bezieht, umfasst, wobei die mindestens eine Aktion (108) Folgendes beinhaltet:
Bestimmen, ob jeder Fehlercode adressiert werden muss oder nicht;
als Reaktion auf das Bestimmen, dass ein Fehlercode adressiert werden muss, Beheben des Fehlercodes; und
als Reaktion auf das Bestimmen, dass ein Fehlercode nicht adressiert werden muss, Löschen oder Entfernen des Fehlercodes.

8. Verfahren gemäß einem der Ansprüche 5 bis 7, wobei die mindestens eine Aktion (108) das Programmieren und/oder Aktualisieren von mindestens einem Softwaremodul in dem Fahrzeug beinhaltet.

9. Verfahren gemäß einem der Ansprüche 5 bis 8, das ferner Folgendes beinhaltet:
Abrufen und/oder Speichern von Daten, die aus der Diagnosebewertung des Fahrzeugs resultieren; und/oder
Abrufen und/oder Speichern von Daten, die aus dem Warten des Fahrzeugs resultieren.

10. Verfahren gemäß einem der Ansprüche 5 bis 9, wobei die mindestens eine Aktion (108) das Einleiten und Verwalten eines Neukalibrierungsprozesses (204) von mindestens einem Fahrzeugsensor beinhaltet.

11. Verfahren gemäß Anspruch 10, wobei der Neukalibrierungsprozess (204) Folgendes beinhaltet:
Identifizieren einer Position und/oder Ausrichtung des Fahrzeugsensors; und
Bestimmen, ob sich der Fahrzeugsensor in der korrekten Position und/oder Ausrichtung befindet.

12. Verfahren gemäß Anspruch 11, wobei der Neukalibrierungsprozess ferner Folgendes beinhaltet:
als Reaktion auf das Bestimmen, dass sich der Fahrzeugsensor in der korrekten Position und/oder Ausrichtung befindet, Ausgeben einer Bestätigung an einen lokalen Techniker an dem ersten Standort; und
als Reaktion auf das Bestimmen, dass sich der Fahrzeugsensor in der inkorrekten Position und/oder Ausrichtung befindet, Ausgeben von Anweisungen an einen lokalen Techniker an dem ersten Standort, um den Fahrzeugsensor in die korrekte Position und/oder Ausrichtung zu bringen.

13. Verfahren gemäß einem der Ansprüche 5 bis 12, wobei die Diagnosebewertung des Fahrzeugs eine erste Diagnosebewertung ist, wobei das Verfahren ferner Folgendes beinhaltet:
Durchführen einer zweiten Diagnosebewertung (110; 206) des Fahrzeugs nach dem Ergreifen der mindestens einen Aktion, wobei die zweite Diagnosebewertung einem der Ansprüche 1 bis 4 entspricht.

14. Ein Verfahren zum Ersetzen einer Komponente eines Fahrzeugs, das Folgendes beinhaltet:
Entfernen (202) der Komponente aus dem Fahrzeug und Installieren einer Ersatzkomponente in dem Fahrzeug;
Durchführen (204; 206) einer Diagnosebewertung des Fahrzeugs gemäß einem der Ansprüche 1 bis 4 oder Warten des Fahrzeugs gemäß einem der Ansprüche 5 bis 13.

15. Ein Verfahren zum Ersetzen einer Komponente eines Fahrzeugs, das Folgendes beinhaltet:
Durchführen (200) einer Diagnosebewertung eines Fahrzeugs, wobei die Diagnosebewertung gemäß einem der Ansprüche 1 bis 4 durchgeführt wird;
Entfernen (202) der Komponente aus dem Fahrzeug und Installieren einer Ersatzkomponente in dem Fahrzeug; und
Warten (204; 206) des Fahrzeugs gemäß einem der Ansprüche 5 bis 13.

## Revendications

1. Un procédé de réalisation d'une évaluation diagnostique d'un véhicule (10), comprenant :
la connexion (100) d'un dispositif informatique local (12) à un véhicule (10), le dispositif informatique local (12) et le véhicule (10) étant fournis en un premier emplacement ;
la fourniture d'un dispositif informatique distant (14) en un deuxième emplacement, le deuxième emplacement étant distant du premier emplacement ;
l'établissement (102) d'une liaison de communication sans fil (13) entre le dispositif informatique distant (14) et le dispositif informatique local (12), permettant ainsi au dispositif informatique distant (14) de commander le dispositif informatique local (12) ;
à l'aide du dispositif informatique distant (14), la commande (104) du dispositif informatique local (12) pour accéder à un portail de fabricant d'équipement d'origine, FEO, (16), connectant ainsi de manière opérationnelle le portail FEO (16) au dispositif informatique local (12) ; et
la réalisation (106) d'une évaluation diagnostique du véhicule (10), l'évaluation diagnostique du véhicule étant réalisée par le portail FEO (16) à l'aide du dispositif informatique local (12), le dispositif informatique local (12) pouvant être commandé pendant l'évaluation diagnostique par le dispositif informatique distant (14),
dans lequel l'établissement de la liaison de communication sans fil (13) entre le dispositif informatique distant (14) et le dispositif informatique local (12) comprend l'utilisation d'une application de bureau distante sur le dispositif informatique distant (14).

2. Le procédé de la revendication 1, dans lequel l'accès au portail FEO comprend en outre la saisie (105) de détails d'authentification sur le dispositif informatique local (12) via la liaison de communication sans fil (13), les détails d'authentification étant associés à un utilisateur enregistré du portail FEO (16).

3. Le procédé de n'importe quelle revendication précédente, avant de permettre au dispositif informatique distant (14) de commander le dispositif informatique local (12), le procédé comprenant l'envoi (101) d'une communication électronique à un technicien distant pour demander le lancement de l'évaluation diagnostique distante.

4. Le procédé de n'importe quelle revendication précédente, dans lequel la réalisation (106) de l'évaluation diagnostique du véhicule inclut la réalisation d'un balayage diagnostique ou d'un pré-balayage diagnostique d'au moins un système électronique dans le véhicule.

5. Un procédé d'entretien d'un véhicule, comprenant :
la réalisation d'une évaluation diagnostique du véhicule selon l'une quelconque des revendications 1 à 4 ; et
la prise d'au moins une mesure (108) en réponse à l'évaluation diagnostique du véhicule.

6. Le procédé de la revendication 5, dans lequel l'évaluation diagnostique inclut la réalisation d'un balayage diagnostique ou d'un pré-balayage diagnostique d'au moins un système électronique du véhicule et l'identification d'au moins un code d'anomalie relatif à l'au moins un système électronique, dans lequel l'au moins une mesure comprend :
l'examen de l'au moins un code d'anomalie pour déterminer la cause du code d'anomalie.

7. Le procédé de la revendication 5, dans lequel l'évaluation diagnostique inclut la réalisation d'un balayage diagnostique ou d'un pré-balayage diagnostique d'au moins un système électronique du véhicule et l'identification d'au moins un code d'anomalie relatif à l'au moins un système électronique, dans lequel l'au moins une mesure (108) comprend :
la détermination s'il est nécessaire de s'occuper de chaque code d'anomalie ou non ;
en réponse à la détermination qu'il est nécessaire de s'occuper d'un code d'anomalie, la résolution du code d'anomalie ; et
en réponse à la détermination qu'il n'est pas nécessaire de s'occuper d'un code d'anomalie, la suppression ou l'effacement du code d'anomalie.

8. Le procédé de n'importe lesquelles des revendications 5 à 7, dans lequel l'au moins une mesure (108) comprend la programmation et/ou la mise à jour d'au moins un module logiciel dans le véhicule.

9. Le procédé de n'importe lesquelles des revendications 5 à 8, comprenant en outre :
la récupération et/ou le stockage de données résultant de l'évaluation diagnostique du véhicule ; et/ou
la récupération et/ou le stockage de données résultant de l'entretien du véhicule.

10. Le procédé de n'importe lesquelles des revendications 5 à 9, dans lequel l'au moins une mesure (108) comprend le lancement et la gestion d'un processus de réétalonnage (204) d'au moins un capteur de véhicule.

11. Le procédé de la revendication 10, dans lequel le processus de réétalonnage (204) comprend :
l'identification d'une position et/ou d'une orientation du capteur de véhicule ; et
la détermination si le capteur de véhicule est dans la position et/ou l'orientation correctes.

12. Le procédé de la revendication 11 dans lequel le processus de réétalonnage comprend en outre :
en réponse à la détermination que le capteur de véhicule est dans la position et/ou l'orientation correctes, la fourniture en sortie d'une confirmation à un technicien local au premier emplacement ; et
en réponse à la détermination que le capteur de véhicule est dans la position et/ou l'orientation incorrectes, la fourniture en sortie d'instructions à un technicien local au premier emplacement pour régler le capteur de véhicule sur la position et/ou l'orientation correctes.

13. Le procédé de n'importe lesquelles des revendications 5 à 12, dans lequel l'évaluation diagnostique du véhicule est une première évaluation diagnostique, le procédé comprenant en outre :
la réalisation d'une deuxième évaluation diagnostique (110 ; 206) du véhicule après la prise de l'au moins une mesure, la deuxième évaluation diagnostique étant selon l'une quelconque des revendications 1 à 4.

14. Un procédé de remplacement d'un composant d'un véhicule, comprenant :
le retrait (202) du composant du véhicule et l'installation d'un composant de remplacement dans le véhicule ;
la réalisation (204 ; 206) d'une évaluation diagnostique du véhicule selon n'importe lesquelles des revendications 1 à 4, ou l'entretien du véhicule selon l'une quelconque des revendications 5 à 13.

15. Un procédé de remplacement d'un composant d'un véhicule, comprenant :
la réalisation (200) d'une évaluation diagnostique d'un véhicule, l'évaluation diagnostique étant réalisée selon l'une quelconque des revendications 1 à 4 ;
le retrait (202) du composant du véhicule et l'installation d'un composant de remplacement dans le véhicule ; et
l'entretien (204 ; 206) du véhicule selon l'une quelconque des revendications 5 à 13.
